# EUROPEAN PATENT APPLICATION

(11) **EP 2 012 067 A2**
(43) Date of publication of application: **07.01.2009**
(21) Application number: 08102474.7
(22) Date of filing: 11.03.2008
(51) Int. Cl.: F24D 10/00

(54) **Device for connecting a tube network**

(30) Priority: 13.03.2007 NL 2000534
(71) Applicant: H.A. Prince Beheer Bergen op Zoom B.V., 4691 RX Tholen (NL)
(72) Inventor: Prince, Hendrikus Andreas, 4624 CP, Bergen op Zoom (NL); Keijzer, Harry Johannes, 4624 VD, Bergen op Zoom (NL)
(74) Representative: D'Halleweyn, Nele Veerle Trees Gertrudis

(57) **Abstract**

Connecting module for connecting a network of tubes to a distribution conduit, comprising an assembly of a container with a number of upright walls and a cover fitting thereon, a feed tube part for connection to a distribution feed conduit, a discharge tube part for connection to a distribution discharge conduit, and a number of connecting pieces for connecting respectively the feed and discharge tube parts to the tube network, wherein the feed tube part and the discharge tube part are arranged adjacently of the container by connection to a first series of connecting tubes in a first upright wall which are directed transversely of the feed and discharge tube parts, each first connecting tube is connected, optionally via control means, to a second connecting tube arranged in a second upright wall, wherein the second connecting tubes are adapted to be connected in each case to a tube end of the tube network.

## Description

The invention relates to a connecting module for connecting a network of tubes to a distribution conduit, comprising an assembly of a container with a number of upright walls and a cover fitting thereon, a feed tube part for connection to a distribution feed conduit, a discharge tube part for connection to a distribution discharge conduit, and a number of connecting pieces for connecting respectively the feed and discharge tube part to the tube network.

Such connecting modules are known and are for instance described in the European patent applications EP 07 002 474.4 and EP 03 078 875.6 in the name of applicant, these applications being incorporated herein by way of reference.

Figure 1 shows a prior art connecting module which is protected by EP 07 002 474.4. The connecting box comprises a container 101 and a cover 102. Container 101 has a bottom 103 and four upright side walls 104. The container is provided with an upper flange onto which cover 102 can be fastened using bolts 105 and nuts. Two distribution tubes 106, 107 are arranged one above the other in the connecting box. One of these distribution tubes is typically used for the supply of water and the other for the discharge of water. Arranged in the foremost upright wall 104 are a number of connecting pieces 108, which connecting pieces can be connected to a tube network. These connecting pieces are connected in the box to distribution tube parts 106, 107. For other possible variants of this connecting module reference is made to the above stated European patent application EP 07 002 474.4.

The present invention has for its object to propose a connecting module for connecting a tube network which has a smaller, more compact container as compared to the prior art connecting modules, and which can also be connected in a convenient manner.

The invention is distinguished for this purpose by the measures of claim 1.

By placing the distribution tube parts outside the container itself but still arranging these as part of the connecting module and fixedly connected to the container, a smaller more compact container can be used. The connecting module can further be coupled in rapid and simple manner to respectively the main pipes and the tube network, wherein all manner of control means, such as a flow control, a combined closing/regulating unit, a tap, venting nipples etc., can be provided between the first and second connecting pieces.

The invention will be further elucidated on the basis of the following figure description and the appended drawing, in which a non-limitative exemplary embodiment of the invention is discussed. In the drawing:

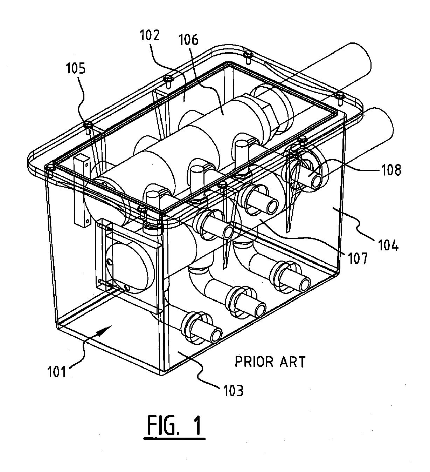

figure 1 shows a perspective view of a prior art connecting module;
figure 2 shows a perspective view of a connecting module according to the invention;
figure 3 shows a schematic view of an application in which the connecting module according to the invention is used;
figures 4A-4C show a number of examples of the control means which can be provided in a connecting module according to the invention.

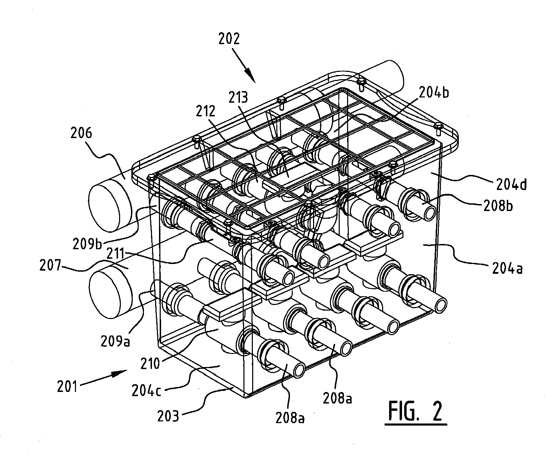

Figure 2 shows a possible embodiment of the connecting module according to the invention. The connecting module comprises an assembly of a container 201 and a cover 202. The container has a bottom part 203 and four upright walls 204a-204d. Adjacently of a first upright wall 204b a distribution feed tube part 207 and a distribution discharge tube part 206 are mounted one above the other and parallel to this upright wall. These distribution feed and discharge tube parts are connected via a series of connecting tubes 209a, 209b which are directed transversely thereof and arranged in upright wall 204b of container 201. Connecting tubes 209a, 209b are mounted in openings in upright wall 204b using a tubular plug whereby the tube end protrudes. Provided in the illustrated variant are four lower connecting tubes 209a which are connected to distribution feed tube 207, and five upper connecting tubes 209b, 212 which are connected to a distribution discharge tube 206. The fifth connecting tube 212 is coupled to a tap part 213 and has a filling function. Water can be added to the system along this connecting tube 212.

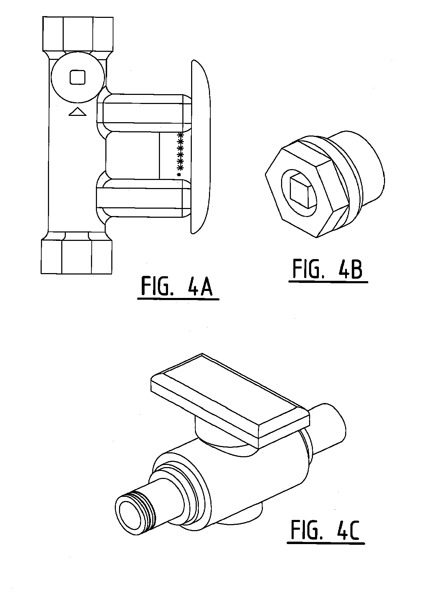

In the upright wall 204a opposite upright wall 204b are also provided a number of openings in which connecting tubes 208a and 208b are mounted using tubular plugs. These eight connecting pieces 208a, 208b are preferably placed substantially opposite connecting pieces 209a, 209b. Depending on the desired application, the first connecting tubes 209a, 209b and the second connecting tubes 208a, 208b can be mutually connected, optionally via control means. In the illustrated variant the lower connecting tubes 209a, 208a are mutually connected, in each case via a tap element 210. The upper connecting pieces are mutually connected via in each case a flow control 211. Flow control 211 shown in figure 2 can be adjusted using a screwdriver. In this way the flow rate of the supplied water flow can be regulated, particularly in accordance with the connected tube network. Figure 4(A) shows another possible flow control 211.

The discharge and/or feed tube 206, 207 can further be provided with a venting nipple in the highest part thereof. A venting which can be used for this purpose is shown in figure 4(B).

Although the discharge tube part is arranged above the feed tube part in the shown embodiment, the skilled person will appreciate that the reverse is also possible, wherein the direction of the flow control must of course be modified.

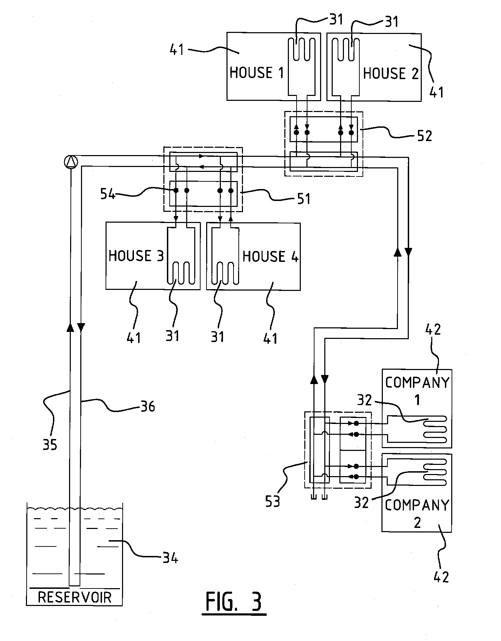

Figure 3 shows schematically an application in which a number of connecting modules according to the invention are used. The connecting modules are used in two groups in this application for the purpose of connecting the tube networks of a number of houses 41 and of a number of commercial premises 42 to an energy storage system 34 which is located in the ground and which for instance makes use of geothermal heat. A first distribution feed conduit 35 carries water from the energy storage system 34 to the respective tube networks 31, 32 in houses 41 and commercial premises 42 via connecting modules 51, 52, 53. The water leaves tube networks 31, 32 via the respective connecting modules 51, 52, 53 and is fed back via discharge distribution conduit 36 to energy reservoir 34.

The skilled person will appreciate that this is only one possible application, and that the connecting modules can likewise be used to heat or cool for instance a roadway, a bridge, etc. The skilled person will further appreciate that the connecting module is not only suitable for the connection of water pipes but is also suitable for connection to pipes transporting another fluid.

The skilled person will further appreciate that the connecting modules can be provided with a random number of connecting tubes in accordance with the number of tube networks for coupling. A number of connecting modules can further be coupled in series, wherein the short walls of the modules are placed adjacently of each other and wherein feed and discharge tube parts of two adjacent modules are mutually connected.

The invention is not limited to the above described exemplary embodiments thereof, and the skilled person will appreciate that many modifications or variations are possible without departing from the scope of the invention. The scope of protection is defined solely by the following claims.

## Claims

1. Connecting module for connecting a network of tubes to a distribution conduit, comprising an assembly of a container with a number of upright walls and a cover fitting thereon, a feed tube part for connection to a distribution feed conduit, a discharge tube part for connection to a distribution discharge conduit, and a number of connecting pieces for connecting respectively the feed and discharge tube parts to the tube network, **characterized in that** the feed tube part and the discharge tube part (206, 207) are arranged adjacently of the container by connection to a first series of connecting tubes (209a, 209b) in a first upright wall which are directed transversely of the feed and discharge tube parts, each first connecting tube is connected, optionally via control means, to a second connecting tube arranged in a second upright wall, wherein the second connecting tubes are adapted to be connected in each case to a tube end of the tube network.

2. Connecting module as claimed in claim 1, **characterized in that** a connecting tube of the first series of connecting tubes is connected via one of the following control means to a corresponding connecting tube of the second connecting tubes: flow control, combined closing/regulating unit, tap etc.

3. Connecting module as claimed in claim 1 or 2, **characterized in that** the feed tube part and discharge tube part are arranged above each other and parallel to the first upright wall of the container.

4. Connecting module as claimed in claim 3, **characterized in that** the first series of connecting tubes consists of an upper and lower row of connecting tubes for connection to the respective feed and discharge tube parts, which first connecting tubes are mounted in the first wall of the container.

5. Connecting module as claimed in claim 4, **characterized in that** the second series of connecting tubes comprises an upper and lower row of connecting tubes in a second upright wall opposite the first upright wall such that the first connecting tubes lie substantially opposite the second connecting tubes.

6. Connecting module as claimed in any of the foregoing claims, **characterized in that** the container and the cover are manufactured from a stiff plastic.

7. Connecting module as claimed in any of the foregoing claims, **characterized in that** the discharge tube part and/or the feed tube part are provided with a venting mechanism.

8. Use of a connecting module as claimed in any of the foregoing claims for connecting a tube network at least partially arranged in one of the following elements: one or more houses, a roadway, a bridge, an airport, a commercial premises, a building site, a residential area, a garden, a home zone.

9. Assembly of container and cover for use in a connecting module as claimed in any of the foregoing claims.
